Europäisches Patentamt

European Patent Office

Office européen des brevets

(19)

(11) Veröffentlichungsnummer: **0 294 501**
**B1**

(12) **EUROPÄISCHE PATENTSCHRIFT**

(45) Veröffentlichungstag der Patentschrift:
06.06.90

(51) Int. Cl.⁵: **C04B 26/04**, E04F 15/12

(21) Anmeldenummer: 87108333.3

(22) Anmeldetag: 10.06.87

(54) Verwendung eines Estrichs für Fussbodenheizungen.

(43) Veröffentlichungstag der Anmeldung:
14.12.88 Patentblatt 88/50

(45) Bekanntmachung des Hinweises auf die Patenterteilung:
06.06.90 Patentblatt 90/23

(84) Benannte Vertragsstaaten:
AT BE CH DE ES FR GB GR IT LI LU NL SE

(56) Entgegenhaltungen:
EP-A- 0 146 098
EP-A- 0 211 712

CHEMICAL ABSTRACTS, Band 99, Nr. 22, 28.
November 1983, Seite 65, Zusammenfassung
Nr. 177208u, Columbus, Ohio, US; &
JP-A-58 120 562 (IDEMITSU KOSAN CO.,
LTD) 18-07-1983

Die Akte enthält technische Angaben, die nach dem
Eingang der Anmeldung eingereicht wurden und die
nicht in dieser Patentschrift enthalten sind.

(73) Patentinhaber: Elsner, Wilfried, Zum Mussenbach 44,
D-4410 Warendorf 3(DE)
(84) Benannte Vertragsstaaten: BE DE ES FR GB GR IT LU NL
SE AT

(73) Patentinhaber: Kotsch, Peter, Jahnstrasse 10,
D-8071 Stammham(DE)
(84) Benannte Vertragsstaaten: BE DE ES FR GB GR IT LU NL
SE AT

(73) Patentinhaber: ACIFER VISP AG, CH-3930 Visp(CH)
(84) Benannte Vertragsstaaten: CH LI

(72) Erfinder: Elsner, Wilfried, Zum Mussenbach 44,
D-4410 Warendorf 3(DE)
Erfinder: Stockl, Horst, Knappenweg 7, D-4714 Selm(DE)

(74) Vertreter: Dipl.-Phys.Dr. Manitz
Dipl.-Ing.Dipl.-Wirtsch.-Ing. Finsterwald Dipl.-Phys.
Rotermund Dipl.-Chem.Dr. Heyn B.Sc.(Phys.) Morgan,
Robert-Koch-Strasse 1, D-8000 München 22(DE)

**Beschreibung**

Die Erfindung betrifft die Verwendung eines aus einem aushärtendem Gemisch von Sand und Bindemittel bestehenden Estrichs.

Bei den in der Praxis in großem Umfang verwendeten Estrichen wird als Bindemittel im Regelfall Zement verwendet, und zwar in Abhängigkeit vom jeweiligen Einsatzgebiet ggf. mit verschiedenartigen Zuschlägen.

Diese bekannten Estriche weisen jedoch eine Reihe von Nachteilen auf, die vor allem darin bestehen, daß relativ lange Trocknungs- und Aushärtezeiten erforderlich sind, eine vergleichsweise große Aufbauhöhe benötigt wird, um die notwendige Festigkeit zu gewährleisten und insbesondere im Zusammenhang mit Fußbodenheizungen eine sorgfältige Ausbildung von Dehnungsfugen erforderlich ist. Ferner ist bei den herkömmlichen Estrichen ungünstig, daß im Zusammenhang mit Fußbodenheizungen die Erstaufheizung erst nach vergleichsweiser langer Wartezeit durchgeführt werden kann und sich später im Betrieb relativ lange Aufheiz- und Speicherzeiten ergeben, die nur eine äußerst träge Temperaturregelung zulassen.

Aufgabe der Erfindung ist es daher, einen die vorstehend erwähnten Nachteile nicht mehr aufweisenden Estrich zu verarbeiten, der sich durch hohe Verschleißfestigkeit auszeichnet und unter Gewährleistung der erforderlichen Festigkeit eine besonders niedrige Aufbauhöhe besitzt. Ferner soll dieser Estrich bei Verwendung im Zusammenhang mit Fußbodenheizungen eine kurze Aufheizzeit besitzen und eine wesentliche Verkürzung der Trocknungs- und Aushärtezeitspannen ermöglichen, die schon nach vergleichsweise kurzer Zeit die Fortführung der Folgegewerke ermöglicht.

Gelöst wird diese Aufgabe durch den Gegenstand des Anspruchs 1, gemäß dem als Sand Quarzsand mit einer Körnung im Bereich von etwa 0,3 bis 1,2 mm verwendet wird und daß das Bindemittel aus einem flüssigen, durch Aufnahme von Luftsauerstoff aushärtenden Polymer besteht, wobei das Mischungsverhältnis derart gewählt ist, daß sich zwischen den Sandkörnern unter Ausbildung eines druckfesten, einen hohen Hohlraumgehalt aufweisenden, unverdichteten Gebildes zumindest im wesentlichen punktförmige Bindungen ergeben.

Durch die Abkehr von den bisher üblichen, mit Zement und Wasser gebundenen Estrichen und den Übergang auf ein durch Aufnahme von Luftsauerstoff aushärtendes System wird im Vergleich zu den herkömmlichen Estrichen eine kurze Trocknungs- und Aushärtezeit erreicht und sichergestellt, daß nach spätestens 48 Stunden eine die Fortführung von Folgegewerken ermöglichende Festigkeit gegeben ist. Eine weitere Verkürzung der Trocknungs- und Aushärtezeiten ergibt sich im Zusammenhang mit Fußbodenheizungen, da in diesem Falle praktisch unmittelbar nach dem Einbringen des Estrichs eine Aufheizung, z.B. auf 45 bis 55°C, möglich ist und eine weitere Verkürzung der Trocknungs- und Aushärtephase erzielt wird.

Aufgrund der Auswahl einer bestimmten, in vergleichsweise engen Grenzen liegenden Quarzsandkörnung und die spezielle gegenseitige Bindung der Sandkörner wird es möglich, eine überraschend hohe Festigkeit zu erzielen, die es wiederum ermöglicht, im Vergleich zu herkömmlichen Estrichen mit wesentlich geringerer Aufbauhöhe zu arbeiten, und zwar ohne Einbussen hinsichtlich der geforderten Druckfestigkeit sowie der Zugfestigkeitswerte.

Die durch die Erfindung ermöglichte Verringerung der Aufbauhöhe wirkt sich in der Praxis sehr vorteilhaft aus, da diese Verringerung der Aufbauhöhe sehr ausgeprägt ist und im Fußbodenheizungsbereich, wo sie mit herkömmlichen Estrichen etwa 8,5 cm bei 2 cm Rohrüberdeckung beträgt, unter Aufrechterhaltung dieser Rohrüberdeckung auf etwa 4 cm verringert werden kann.

Die Verwendung eines Polymers als Bindemittel hat zur Folge, daß der Estrich ohne irgendwelche sonstigen Zusätze eine Dauerelastizität besitzt, die ein Verarbeiten des Estrichs ohne die herkömmlichen Dehnungsfugen ermöglicht und demgemäß nur noch das Anbringen der üblichen Randdämmstreifen erfordert.

Für die unmittelbare Verarbeitung des Estrichs müssen im Vergleich zu der herkömmlichen Estricheinbringung keine besonderen Forderungen gestellt werden, es entfällt jedoch jegliches Verdichten, was als weiterer Vorteil bezeichnet werden kann.

Besonders zu betonen sind die mittels des erfindungsgemäßen Estrichs erreichbaren Vorteile im Zusammenhang mit Fußbodenheizungen.

Zum einen kann nämlich - wie bereits erwähnt unmittelbar nach Einbringung des Estrichs eine Aufheizung und damit eine Verkurzüng der Trocknungs- und Aushärtezeit erfolgen, und zum anderen läßt der erfindungsgemäße Estrich eine mit statischen Heizflächen vergleichbare Regelung zu, da der ausgehärtete Estrich ein Feinkanalsystem bedingt durch die spezielle Bindung der Sandkörner aufweist, das es ermöglicht, bei einer vergleichsweisen geringen Aufheizzeit mit einer Vorlauftemperatur von etwa 38°C die ideale Oberflächentemperatur von 29,5°C zu erreichen. Gleichzeitig besitzt der Estrich eine ausreichende Speicherzeit von etwa 1,5 Stunden, da sich hierbei der durch den Quarzsand erbrachte Speicherofeneffekt auswirkt.

Im Gegensatz zum herkömmlichen Estrich, der eine Speicher zeit von etwa 3 Stunden besitzt, ist somit mittels des erfindungsgemäßen Estrichs eine unmittelbare Regelung der Fußbodenheizung möglich, indem man vorzugsweise die Temperatur im Heizestrich mittels eines Fuhlers erfaßt und diese Temperatur als Regelgröße benutzt. Auf diese Weise ist es auch möglich, die Fußbodenheizung entsprechend den jeweiligen Anforderungen bei starker Sonneneinwirkung in den Übergangszeiten zu regeln, was bekanntlich mit den herkömmlichen Estrichen nicht erreichbar ist.

Die Herstellung des Gemisches ist unproblematisch und kann beispielsweise mittels eines Zwangsmischers bei einer Mischungszeit von 1 bis 2 Minuten erfolgen. Günstig ist dabei auch, daß der Estrich gemäß der Erfindung frostbeständig ist, mit üblichen Transportgeräten befördert werden kann und auch geruchsfrei ist.

Besonders vorteilhafte Merkmale des Estrichs nach der Erfindung sind in den Unteransprüchen angegeben.

**Patentansprüche**

1. Verwendung eines aus einem aushärtenden Gemisch von Quarzsand mit einer Körnung im Bereich von etwa 0,3 bis 1,2 mm und einem Bindemittel aus einem flüssigen, durch Aufnahme von Luftsauerstoff aushärtenden Polymer bestehenden Estrichs für Fußbodenheizungen, wobei das Mischungsverhältnis derart gewählt ist, daß sich zwischen den Sandkörnern unter Ausbildung eines druckfesten, einen hohen Hohlraumgehalt aufweisenden, unverdichteten Gebildes zumindest im wesentlichen punktförmige Bindungen ergeben.

2. Verwendung nach Anspruch 1, derart daß Sand im Korngrößenbereich von 0,6 bis 1,2 mm oder im Korngrößenbereich von 0,3 bis 0,8 mm in gebrannter und gewaschener, einen SiO₂-Gehalt bis 99,5 % aufweisender Form verwendet wird und daß das flüssige Polymer aus einem hochungesättigten Polybutadien besteht.

3. Verwendung nach Anspruch 2, derart daß das Polybutadien etwa 72 % 1,4-cis Doppelbindungen, etwa 27 % 1,4-trans Doppelbindungen und etwa 1 % 1,2-vinyl Doppelbindungen aufweist und eine Molmasse von etwa 1800, eine Dichte von etwa 0,91 g/cm³ und eine Viskosität von etwa 770 mPa s/20°C (Broukfield) besitzt.

4. Verwendung nach Anspruch 3, derart daß das Polybutadien mit Trockenstoffen vom Typ mehrwertiger organischer Metallsalze, wie z.B. Kobalt, Blei, Mangan, und mit Netzmitteln vom Typ der Nonylphenoloxethylate versetzt ist.

5. Verwendung nach einem der vorhergehenden Ansprüche, derart daß das Mischungsverhältnis von Quarzsand und Bindemittel in Massenteilen etwa 97 zu 3 beträgt und das Gemisch eine Prismendichte von etwa 1,6 g/cm³ besitzt.

**Claims**

1. Use of a flooring plaster for underfloor heating systems, the flooring plaster comprising a hardening mixture of quartz sand with a grain size in the range from approximately 0.3 to 1.2 mm and a binder of a liquid polymer which cures by the take up of oxygen from the air, with the mixing ratio being selected such that at least substantially point-like bonds result between the grains of sand while forming a pressure resistant noncompressed structure having a high content of hollow cavities.

2. Use in accordance with claim 1, such that the sand is used in the range of grain sizes 0.6 to 1.2 mm, or in the range of grain sizes from 0.3 to 0.8 mm, in dired and washed form having a silicon SiO₂ content up to 99.5%; and in that the liquid polymer comprises a highly unsaturated polybutadiene.

3. Use in accordance with claim 2, such that the polybutadiene has approximately 72% of 1,4 cis double bonds, approximately 27% 1.4-trans double bonds, and approximately 1% of 1.2 vinyl double bonds and a molecular mass of approximately 1800, a density of approximately 0.91 g/cm³ and a viscosity of approximately 770 mPa s/20°C (Broukfield).

4. Use in accordance with claim 3, such that the polybutadiene is mixed with dry substances of the type of polyvalent organic metal salts such as cobalt, lead, manganese and with wetting agents of the type of the nonylphenol oxyethylates.

5. Use in accordance with one of the preceding claims such that the mixing ratio of quartz sand and binding agent in parts by mass amounts to approximately 97 to 3 and the mixture has a prismatic density of approximately 1.6 g/cm³.

**Revendications**

1. Application d'une chape pour chauffages au sol, composée d'un mélange durcissable composé de sable silicieux présentant une granulation de l'ordre de 0,3 à 1,2 mm et d'un agent liant composé d'un polymère liquide apte à durcir par absorption d'oxygène atmosphérique, dans laquelle le rapport des agrégats est choisi de manière à ce qu'il se produise entre les grains de sable des raccordements au moins substantiellement en forme de points par formation d'une structure non comprimée, résistant à la pression et présentant une forte proportion d'espaces vides.

2. Application selon la revendication 1, caractérisée en ce qu'on utilise du sable présentant une granulation de l'ordre de 0,6 à 1,2 mm ou de l'ordre de 0,3 à 0,8 mm sous une forme calcinée et lavée présentant une teneur en SiO₂ pouvant aller jusqu'à 99,5%, et en ce que le polymère liquide se compose d'un polybutadiène fortement insaturé.

3. Application selon la revendication 2, caractérisée en ce que le polybutadiène comporte environ 72% de doubles liaisons 1,4-cis, environ 27% de doubles liaisons 1,4-trans et environ 1% de doubles liaisons 1,2-vinyle et possède une masse moléculaire d'environ 1800, une densité d'environ 0,91 g/cm³ et une viscosité d'environ 770 mPa.s. à 20°C (Broukfield).

4. Application selon la revendication 3, caractérisée en ce que le polybutadiène est mélangé à des dessicateurs du type sels métalliques organiques polyvalents, comme par exemple du cobalt, du plomb, du manganèse ou à des agents dispersants du type nonylphénoloxéthylate

5. Application selon l'une quelconque des revendications précédentes, caractérisée en ce que le rapport des agrégats dans le mélange sable silicieux - agent liant est d'environ 97:3 parties en masse et le mélange possède une densité prismatique d'environ 1,6 g/cm³.